# EUROPÄISCHE PATENTSCHRIFT

(11) **EP 2 202 856 B1**
(45) Veröffentlichungstag und Bekanntmachung des Hinweises auf die Patenterteilung: **23.01.2019**
(21) Anmeldenummer: 09015459.2
(22) Anmeldetag: 15.12.2009
(51) Int. Cl.: H02G 3/14, H01H 9/18, H01H 27/00, H02G 3/20

(54) **Elektrisches Installationsgerät**
Electric installation device
Appareil d'installation électrique

(30) Priorität: 24.12.2008 DE 102008063108
(43) Veröffentlichungstag der Anmeldung: 30.06.2010
(73) Patentinhaber: Merten GmbH, 51674 Wiehl (DE)
(72) Erfinder: Vicktorius, Richard, 50733 Köln (DE)

(56) Entgegenhaltungen:
- DE-A1- 4 446 790
- DE-U1- 29 721 427
- JP-U- H0 628 960

## Beschreibung

Die Erfindung betrifft ein elektrisches installationsgerät nach dem Oberbegriff des Patentanspruches 1.

Im Rahmen der Gebäudeinstallationstechnik können elektrische Installationsgeräte dazu verwendet werden, elektrische Verbraucher mittels Steckdosen mit Energie zu versorgen oder mittels Schaltelementen die Energieversorgung von elektischen Verbrauchern zu steuern. Solche Installationsgeräte können ortsfest in einem Installationsgehäuse angeordnet sein und umfassen einen Gerätesockel und ein frontseitig befestigtes Frontelement, das abhängig von der Ausführungsform ein- oder mehrteilig ausgebildet sein kann.
In Hotels und Appartements sind häufig Installationsgeräte in Form von Kartenschaltem in der Nähe der Eingangstür installiert. Diese Kartenschalter schalten die Stromversorgung ein, wenn eine passende Karte in den Kartenschlitz eingesteckt wird. Um die Installationsgeräte im Dunkeln oder bei unzureichenden Lichtverhältnissen auffinden zu können, sind häufig Beleuchtungselemente in verschiedener Art und Weise integriert.
Aus der DE 44 46 790 C2 ist ein Installationsgerät bekannt, deren Schaltelement mit einer Karte betätigbar ist. Ein Beleuchtungselement weist auf einen Karteneinlass hin.

Die Aufgabe der vorliegenden Erfindung besteht darin, ein elektrisches Installationsgerät in Form eines Kartenschalters zu schaffen, das mit einer funktional und anwenderfreundlich platzierten Beleuchtung ausgestattet ist.

Gelöst wird diese Aufgabe durch die im Patentanspruch 1 angegebenen Merkmale. Vorteilhafte Ausgestaltungen ergeben sich aus der Beschreibung, den Zeichnungen und den Unteransprüchen.

Die Erfindung gemäß dem Patentanspruch 1 weist den Vorteil auf, dass durch die Anordnung eines Beleuchtungselementes an einem Kartenschlitz eines Installationsgerätes der Nutzer bei unzureichenden Lichtverhältnissen sowohl das Installationsgerät als auch den Kartenschlitz sofort erkennt. Es entsteht ein deutlich markierter Kartenschlitz, so dass mehrfache Steckversuche mit der Karte aufgrund mangelnder Markierung des Kartenschlitzes vermieden werden können. Somit kann die bisherige Funktionalität eines Installationsgerätes deutlich verbessert werden.

Elektrische Installationsgeräte können einen Gerätesockel mit einem Schalter und einer Lichtquelle und ein vorgesetztes nutzerseitig sichtbares Frontelement aufweisen, welches ein- oder mehrteilig ausgestaltet sein kann. Das Frontelement kann zumindest einen Einsatz mit einem Kartenschlitz umfassen und kann optional von einem Rahmen umgeben sein. Das Beleuchtungselement kann an dem Kartenschlitz angeordnet sein und kann im Gerätesockel erzeugtes Licht nutzerseitig abstrahlen. Der Einsatz kann in Kombination mit verschieden ausgebildeten Schaltsockeln verwendet werden. Bei einheitlichen mechanischen, elektrischen und/oder optischen Schnittstellen können die Schaltsockel elektromechanisch, mit Mikroschalter oder als Relaiseinsatz ausgestattet sein.

Das Beleuchtungselement kann vorteilhafterweise einseitig des Kartenschlitzes oder den Kartenschlitz umgebend in dem Einsatz angeordnet sein. Das Beleuchtungselement kann zumindest einen lichtdurchlässigen Bereich umfassen, der das innerhalb des Installationsgerätes erzeugte Licht nach außen leiten kann. Das Licht kann radial von dem lichtdurchlässigen Bereich abgestrahlt, um eine gleichmäßige Ausleuchtung zu erhalten. Hierzu kann zumindest der lichtdurchlässige Bereich gekrümmt ausgebildet werden. In weiterer Ausgestaltung können auch andere Abstrahlgeometrien ausgebildet werden. Hierfür können an bzw. in dem Beleuchtungselement weitere Elemente ausgebildet sein, um das von der Lichtquelle abgestrahlte Licht zu lenken, beispielsweise Linsen, Reflexionsflächen und/oder Anfasungen. Durch die Anordnung, Anzahl, Form und/oder Farbe des Beleuchtungselementes können unterschiedliche Lichteffekte und - verteilungen realisiert werden.

Im Rahmen der Erfindung kann als Beleuchtungselement ein transparenter Einsatz oder ein lichtleitender Körper verstanden werden, der das Licht nutzerseitig abstrahlt. Das Beleuchtungselement kann lösbar in dem Einsatz befestigt werden, um im Bedarfsfall einen Austausch zu ermöglichen. Vorteilhafterweise können formschlüssige Aufnahmen ausgestaltet werden, in denen optional komplementäre Rastmittel eine zusätzliche Fixierung schaffen können. In einer weiteren Ausführung sind jedoch auch unlösbare Verbindungen möglich, die vorzugsweise klebend erfolgen.

In einer vorteilhaften Ausgestaltung kann das Beleuchtungselement als lichtverteilender Körper ausgebildet sein, der innerhalb des Einsatzes bis zur Lichtquelle führt und in den das Licht von einer Lichtquelle eingestrahlt wird. Der lichtleitende Körper hat den Vorteil, dass Licht abstrahlende Flächen in unterschiedlichster Form gestaltet werden können. Darüber hinaus ermöglicht der lichtverteilende Körper der Lichtquelle einen größeren Abstrahlbereich. Da die Abstrahlung einer identischen Lichtmenge über eine große Fläche weniger grell und blendend empfunden wird, ist die Verwendung eines lichtverteilenden Körpers von Vorteil. Insbesondere durch die Gestaltung des Abstrahlbereiches lassen sich unterschiedliche Lichteffekte und -verteilungen definieren, vorzugsweise finden angefaste oder abgestufte Abstrahlbereiche Verwendung. Der lichtverteilende Körper kann Acrylglas enthalten. Dabei können polierte Flächen eine vorwiegend reflektierende und angeraute Flächen mit einer vorwiegend emittierenden Wirkung aufweisen.

Vorteilhafterweise ist frontseitig an dem Einsatz ein durchsichtiges Informationsfenster angeordnet, das durch den im Einsatz verlaufenden Lichtleiter hinterstrahlt wird. So kann neben der Markierung des Kartenschlitzes eine zusätzliche Information dargestellt werden. Hierdurch können neben der reinen Beleuchtungsfunktion auch Anwendungen im Bereich der Darstellung von Information oder der bisher an anderer Stelle angeordneten Signalisierung von Zuständen, z. B. Alarme oder Überbelastungen, realisiert werden. Vorteilhafterweise kann die Oberfläche des Informationsfensters im gleichen Design wie das Frontelement gestaltet werden. Hierfür kann das Sichtteil beispielsweise bedruckt, laminiert oder beklebt werden. Im unbenutzten Zustand kann eine einheitliche Oberfläche geschaffen werden, die gegenüber Standardausstattungen das gleiche Erscheinungsbild ermöglicht.

Das Licht kann von einer oder mehreren Lichtquellen erzeugt werden und direkt oder über zumindest einen lichtleitenden Körper (Lichtleiter, Linse) zum Beleuchtungselement transferiert werden. Vorteilhafterweise kann ein lichtleitender Körper als ein- oder mehrteiliges Bauteil ausgebildet sein, welches sowohl den Lichtaustritt am Beleuchtungselement als auch die Lichtleitung von einer im Gerätesockel angeordneten Lichtquelle realisiert. Die Lichtquelle kann austauschbar am Gerätesockel angeordnet sein und auf einem Trägerelement beispielsweise einer Platine, einem Sockel oder einem Gehäuse montiert sein. Der lichtleitende Körper kann am Einsatz angeordnet sein und ein Beleuchtungsmodul bilden, das bei der Montage an dem Gerätesockel selbsttätig elektrisch und/oder optisch kontaktiert. Als Lichtquellen eignen sich Leuchtdioden (LED's, OLED's), Laserdioden, Glimmlampen, Kaltkathodenlampen, Glühlampen oder elektrolumineszierende Lampen (EL-Folie).

Vorteilhafterweise können die Beleuchtungsfunktionen nutzer-, verbrauchs-, zeit-, programm- oder ereignisabhängig gesteuert werden, wobei ein entsprechendes drahtloses oder drahtgebundenes (Bus-)Signal in die Stromversorgung der Lichtquelle eingreift. Dabei können im einfachsten Fall manuell zu bedienende Befehlgeber (Schalter, Taster) an dem Installationsgerät vorhanden sein, die beispielsweise die Lichtquelle ein- und ausschalten und/oder das erzeugte Licht beeinflussen. In einer weiteren Ausführungsform kann ein Dämmerungsschalter vorgesehen sein, der die Beleuchtung des Installationsgerätes erst bei unzureichenden Lichtverhältnissen aktiviert. In einer weiteren Ausführungsform kann ein Bewegungsmelder vorgesehen sein, der die Beleuchtung des Installationsgerätes erst bei Anwesenheit einer Person aktiviert. Des weiteren kann eine Aktivierung der Beleuchtung durch weitere interne und/oder externe Signalgeber möglich sein, z. B. zeit-, programm- oder ereignisgesteuert (Transponder). So braucht der Beleuchtung keine Energie zugeführt werden, wenn die Beleuchtung aufgrund ausreichender Lichtverhältnisse oder Nichtnutzung von Räumen überflüssig ist.

Weitere Einzelheiten, Merkmale und Vorteile der Erfindung ergeben sich aus nachfolgender Beschreibung eines bevorzugten Ausführungsbeispieles anhand der Zeichnungen.

Nachfolgend wird der Aufbau und die Funktionsweise eines erfindungsgemäßen elektrischen Installationsgerätes 1 mit einem Kartenschlitz schematisch anhand eines Ausführungsbeispieles näher beschrieben.

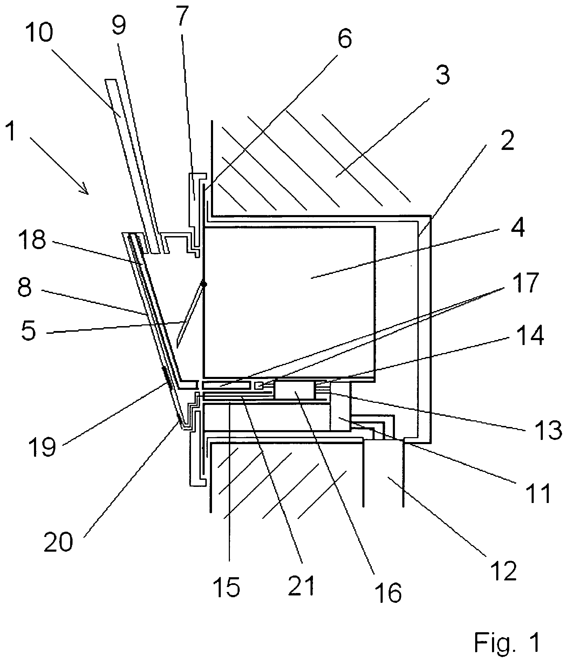

In Fig. 1 ist das elektrische Installationsgerät 1 als Kartenschalter ausgeführt. Das elektrische Installationsgerät 1 ist in einem Installationsgehäuse 2 befestigt, welches ortsfest in einer Gebäudewand 3 fixiert ist. Das elektrische Installationsgerät 1 weist einen Gerätesockel 4 mit einem Schaltelement 5 auf, den außenseitig ein Tragrahmen 6 umgibt, der die Befestigung des elektrischen Installationsgerätes 1 in dem Installationsgehäuse 2 ermöglicht. Frontseitig ist ein mehrteiliges Frontelement 7 befestigt, das einen Einsatz 8 mit einem Kartenschlitz 9 zur Aufnahme einer Karte 10 aufweist. In dem Gerätesockel 4 sind Klemmen 11 zum Anschluss einer Versorgungsleitung 12 und des weiteren metallische Kontaktelemente 13 angeordnet, in die frontseitig Kontakte 14 eines in einem Aufnahmeraum 15 austauschbar angeordneten Lichtmoduls 16 gesteckt werden können. In dem Lichtmodul 16 sind eine Lichtquelle 17 in Form einer LED und weitere elektrische und/oder optische Bauteile zur Spannungsversorgung und Lichtsteuerung angeordnet.

An dem Kartenschlitz 9 ist ein Beleuchtungselement 18 in Form eines Lichtleiters angeordnet, der innerhalb des Einsatzes 8 verläuft und über der Lichtquelle 17 an dem Gerätesockel 4 endet. Das Beleuchtungselement 18 ist an dem Einsatz 8, vorzugsweise lösbar, befestigt. Des weiteren ist im dem Einsatz 8 ein durchsichtiges Informationsfenster 19 angeordnet, das ebenfalls von dem Beleuchtungselement 18 hinterleuchtet wird.

In dem Einsatz 8 befindet sich lichtempfindlicher Sensor 20, der über eine elektrische Verbindung 21 in die Stromversorgung der Lichtquelle 17 eingreifen kann und ein Ein- und Ausschalten ermöglicht. Der Sensor 20 wertet Umgebungslicht aus und schaltet bei Unterschreiten eines definierten Helligkeitswertes die Lichtquelle 17 an. Somit wird eine bedarfsgerechte Beleuchtungssteuerung möglich.

### Bezugszeichenliste

- 1: Installationsgerät
- 2: Installationsgehäuse
- 3: Gebäudewand
- 4: Gerätesockel
- 5: Schaltelement
- 6: Tragrahmen
- 7: Frontelement
- 8: Einsatz
- 9: Kartenschlitz
- 10: Karte
- 11: Klemmen
- 12: Versorgungsleitung
- 13: Kontaktelemente
- 14: Kontakte
- 15: Aufnahmeraum
- 16: Lichtmodul
- 17: Lichtquelle
- 18: Beleuchtungselement
- 19: Informationsfenster
- 20: Sensor
- 21: Verbindung

## Patentansprüche

1. Elektrisches Installationsgerät (1) umfassend einen Gerätesockel (4), der in einem Installationsgehäuse (2) befestigbar ist, der frontseitig ein Schaltelement (5) und eine Lichtquelle (17) aufweist, und umfassend ein frontseitig befestigtes Frontelement (7), das einen Einsatz (8) mit einem Kartenschlitz (9) aufweist, wobei eine Karte (10) während eines Einsteckvorganges in den Kartenschlitz (9) das Schaltelement (5) betätigt, und an dem Kartenschlitz (9) zumindest ein Beleuchtungselement (18) angeordnet ist, und dass von der Lichtquelle (17) ausgestrahltes Licht durch das Beleuchtungselement (18) nutzerseitig abstrahlbar ist, **dadurch gekennzeichnet, dass** das Beleuchtungselement (18) den Kartenschlitz (9) markiert und beleuchtet.

2. Elektrisches Installationsgerät nach Patentanspruch 1, **dadurch gekennzeichnet, dass** das Beleuchtungselement (18) den Kartenschlitz (9) umgebend angeordnet ist.

3. Elektrisches Installationsgerät nach einem der vorhergehenden Patentansprüche, **dadurch gekennzeichnet, dass** das Beleuchtungselement (18) austauschbar an dem Einsatz (8) befestigt ist.

4. Elektrisches Installationsgerät nach einem der vorhergehenden Patentansprüche, **dadurch gekennzeichnet, dass** das Beleuchtungselement (18) als transparenter Körper oder als lichtleitender Körper ausgebildet ist.

5. Elektrisches installationsgerät nach einem der vorhergehenden Patentansprüche, **dadurch gekennzeichnet, dass** das Beleuchtungselement (18) sich von dem Kartenschlitz (9) bis zu der Lichtquelle (17) erstreckt.

6. Elektrisches Installationsgerät nach einem der vorhergehenden Patentansprüche, **dadurch gekennzeichnet, dass** das Beleuchtungselement (18) mehrteilig ausgebildet ist.

7. Elektrisches Installationsgerät nach einem der vorhergehenden Patentansprüche, **dadurch gekennzeichnet, dass** ein Lichtleiter zwischen dem Beleuchtungselement (18) und der Lichtquelle (17) angeordnet ist.

8. Elektrisches installationsgerät nach einem der vorhergehenden Patentansprüche, **dadurch gekennzeichnet, dass** an dem Einsatz (8) frontseitig ein von dem Beleuchtungselement (18) hinterstrahltes durchsichtiges Informationsfenster (19) angeordnet ist.

9. Elektrisches Installationsgerät nach einem der vorhergehenden Patentansprüche, **dadurch gekennzeichnet, dass** die Lichtquelle (17) nutzer-, verbrauchs-, zeit-, programm- oder ereignisabhängig steuerbar ist.

## Claims

1. Electrical installation device (1) comprising a device cap (4) which can be fastened in an installation housing (2) which, on the front side, has a switching element (5) and a light source (17), and comprising a front element (7) which is fastened on the front side and has an insert (8) with a card slot (9), wherein a card (10) operates the switching element (5) during an insertion process into the card slot (9), and at least one lighting element (18) is arranged on the card slot (9), and the light which is emitted by the light source (17) can be emitted through the lighting element (18) on the user side, **characterized in that** the lighting element (18) marks and illuminates the card slot (9).

2. Electrical installation device according to Claim 1, **characterized in that** the lighting element (18) is arranged so as to surround the card slot (9).

3. Electrical installation device according to either of the preceding claims, **characterized in that** the lighting element (18) is fastened to the insert (8) in an exchangeable manner.

4. Electrical installation device according to one of the preceding claims, **characterized in that** the lighting element (18) is in the form of a transparent body or in the form of a light-guiding body.

5. Electrical installation device according to one of the preceding claims, **characterized in that** the lighting element (18) extends from the card slot (9) to the light source (17).

6. Electrical installation device according to one of the preceding claims, **characterized in that** the lighting element (18) is of multipartite design.

7. Electrical installation device according to one of the preceding claims, **characterized in that** a light guide is arranged between the lighting element (18) and the light source (17).

8. Electrical installation device according to one of the preceding claims, **characterized in that** a transparent information window (19) which is backlit by the lighting element (18) is arranged on the insert (8) on the front side.

9. Electrical installation device according to one of the preceding claims, **characterized in that** the light source (17) can be controlled on a user-, consumption-, time-, programme- or event-dependent basis.

## Revendications

1. Appareillage d'installation électrique (1) comprenant un socle d'appareillage (4) qui peut être fixée dans un coffret d'installation (2), lequel possède en face avant un élément de commutation (5) et une source de lumière (17), et comprenant un élément frontal (7) fixé en face avant, lequel possède un insert (8) muni d'une fente à carte (9), une carte (10) actionnant l'élément de commutation (5) pendant l'opération d'insertion dans la fente à carte (9), et au moins un élément d'éclairage (18) étant disposé au niveau de la fente à carte (9) et la lumière émise par la source de lumière (17) pouvant être rayonnée du côté de l'utilisateur, **caractérisé en ce que** l'élément d'éclairage (18) marque et éclaire la fente à carte (9) .

2. Appareillage d'installation électrique selon la revendication 1, **caractérisé en ce que** l'élément d'éclairage (18) est disposé de manière à entourer la fente à carte (9).

3. Appareillage d'installation électrique selon l'une des revendications précédentes, **caractérisé en ce que** l'élément d'éclairage (18) est fixé à l'insert (8) de manière remplaçable.

4. Appareillage d'installation électrique selon l'une des revendications précédentes, **caractérisé en ce que** l'élément d'éclairage (18) est réalisé sous la forme d'un corps transparent ou d'un corps de guidage de la lumière.

5. Appareillage d'installation électrique selon l'une des revendications précédentes, **caractérisé en ce que** l'élément d'éclairage (18) s'étend de la fente à carte (9) à la source de lumière (17).

6. Appareillage d'installation électrique selon l'une des revendications précédentes, **caractérisé en ce que** l'élément d'éclairage (18) est réalisé en plusieurs parties.

7. Appareillage d'installation électrique selon l'une des revendications précédentes, **caractérisé en ce qu'**une fibre optique est disposée entre l'élément d'éclairage (18) et la source de lumière (17).

8. Appareillage d'installation électrique selon l'une des revendications précédentes, **caractérisé en ce qu'**une fenêtre d'information (19) transparente rétroéclairée par l'élément d'éclairage (18) est disposé en face avant au niveau de l'insert (8).

9. Appareillage d'installation électrique selon l'une des revendications précédentes, **caractérisé en ce que** la source de lumière (17) peut être commandée en fonction de l'utilisateur, de la consommation, du temps, d'un programme ou d'un événement.
